Europäisches Patentamt

European Patent Office

Office européen des brevets

(19)

(11) **EP 0 975 228 B1**

(12) **FASCICULE DE BREVET EUROPEEN**

(45) Date de publication et mention
de la délivrance du brevet:
**25.09.2002   Bulletin 2002/39**

(51) Int Cl.⁷: **A01N 65/00**

(21) Numéro de dépôt: **98921572.8**

(22) Date de dépôt: **20.04.1998**

(86) Numéro de dépôt international:
**PCT/FR98/00795**

(87) Numéro de publication internationale:
**WO 98/047375 (29.10.1998 Gazette 1998/43)**

(54) **PROCEDE POUR LA POTENTIALISATION ET LA STIMULATION DES DEFENSES NATURELLES DES PLANTES**

VERFAHREN ZUM POTENZIEREN UND STIMULIEREN NATÜRLICHER ABWEHRSYSTEME BEI PFLANZEN

METHOD FOR POTENTIATING AND STIMULATING PLANT NATURAL DEFENCE SYSTEM

(84) Etats contractants désignés:
**DE ES FR GB GR IT NL PT**

(30) Priorité: **18.04.1997  FR 9704847**

(43) Date de publication de la demande:
**02.02.2000   Bulletin 2000/05**

(73) Titulaire: **LABORATOIRES GOEMAR S.A.
35400 Saint-Malo (FR)**

(72) Inventeurs:
 • **YVIN, Jean-Claude
   F-35400 Saint Malo (FR)**
 • **CRUZ, Florence
   F-35400 Saint Malo (FR)**
 • **JOUBERT, Jean-Marie
   F-35400 Saint Malo (FR)**
 • **CLOAREC, Bernard
   F-29250 Saint Pol de Léon (FR)**
 • **RICHARD, Christophe
   F-29400 Plougourvest (FR)**
 • **PLESSE, Bertrand
   F-67000 Strasbourg (FR)**
 • **KOPP, Marguerite
   F-67120 Wolxheim (FR)**
 • **FRITIG, Bernard
   F-67400 Souffelweyersheim (FR)**

(74) Mandataire: **Koch, Gustave
   Cabinet PLASSERAUD
   84, rue d'Amsterdam
   75440 Paris Cédex 09 (FR)**

(56) Documents cités:
 • **DATABASE WPI Derwent Publications Ltd.,
   London, GB; AN 93-247578 XP002052283
   FUSHIMI SEISAKUSHO KK: "Physioligally active
   pectin oligomer prodn., used to prevent
   infections disease in plants- by reacting pectin
   with pectinase to form oligo: pectin mixt.,
   treating by ultrafiltration and reverse osmosis to
   adjust polymerization deg., isolating and
   purifying" & JP 05 168 490 A**
 • **DATABASE WPI Derwent Publications Ltd.,
   London, GB; AN 97-275451 XP002052284
   AOMORI KEN: "Manufacturing system for
   mono-and oligo-galacturonic acid- comprises
   using pectin or pectic acid powder, ingredient
   supply unit, filtering unit, enzyme reaction unit
   and demineralisation unit" & JP 09 098 795 A**

**Description**

L'invention a pour objet un procédé pour la potentialisation et la stimulation des défenses naturelles des plantes, en particulier des céréales et notamment du blé ainsi que de la pomme de terre et de la vigne.

La stimulation des défenses naturelles des plantes est un problème des plus actuels et fait l'objet de nombreuses recherches.

On sait par exemple que l'incubation de plantes en présence de substances connues sous l'appellation d'éliciteurs, stimule des réactions de défense du type:

- accumulation d'antibiotiques naturels plus connus sous le nom de phytoalexines,
- synthèse de protéines de défense telles que les chitinases ou les glucanases, également connues sous le nom de PRP (Pathogenesis-related proteins),
- durcissement des parois cellulaires par synthèse de lignine ou de protéines de réticulation,
- synthèse de messagers secondaires tels que l'éthylène, le peroxyde d'hydrogène ou l'acide salicylique.

Parmi ces éliciteurs, on peut citer notamment les oligopectines; elles élicitent chez diverses plantes agronomiques les susdites réactions de défense; les réponses maximales sont généralement atteintes pour des concentrations de l'ordre de 100 mg/l et elles se maintiennent à un niveau comparable jusqu'à des concentrations de 4 g/l.

A cet égard et à titre d'exemple, la production et l'accumulation des phytoalexines, en l'occurrence d'avenalumin-1 dans l'avoine, ont été obtenues, selon la demande de brevet japonais publiée N° HEI 3-339080 (JP 5168490) du 20 décembre 1991 de la Société K.K. Fushimi Seiyakusho, par mise en oeuvre sur des morceaux de feuilles d'avoine de solutions aqueuses contenant des oligomères de pectines de DP 6, DP 8, DP 10 ET DP 12 à des concentrations de 100 à 1000 mg/l.

Cette façon de procéder, qui aboutit à la mise en place de réactions de défense en l'absence de tout agent pathogène, présente un certain nombre d'inconvénients parmi lesquels on peut citer une dépense énergétique non négligeable pour la plante.

L'invention a pour but, surtout, de remédier aux inconvénients de l'état antérieur de la technique et de mettre à la disposition des utilisateurs des moyens permettant de faire en sorte que la stimulation des défenses naturelles de la plante ne se produise qu'en cas de besoin, autrement dit lors de l'attaque de la plante par un agent pathogène, ces moyens conférant, par conséquent, à la plante une immunité contre les agents pathogènes.

Et la Société Demanderesse a le mérite d'avoir trouvé, à l'issue de recherches approfondies, que, de façon totalement surprenante et inattendue, non seulement ce résultat était atteint mais qu'il se produisait même une potentialisation des défenses naturelles dès lors que l'on applique sur la plante une composition contenant une ou plusieurs oligopectines composées de moins de 150, de préférence de 3 à 50 et plus préférentiellement de 3 à 20 unités saccharidiques, ces oligopectines étant présentes dans la composition à des concentrations qui n'induisent pas directement de réactions de défense, c'est-à-dire à des concentrations de l'ordre de 1 à 20 mg/l, de préférence de 2 à 10 mg/l et, plus préférentiellement encore, de 5 à 10 mg/l.

Elle a en effet pu montrer que, lorsque les susdites oligopectines sont utilisées sous la forme de compositions dans lesquelles elles sont présentes à des concentrations situées dans un domaine étroit de 1 à 20 mg/l, elles exercent sur les plantes traitées un effet potentialisateur des défenses naturelles qui n'est déclenché qu'à partir du moment où l'attaque d'un agent pathogène se produit effectivement.

L'avantage en est que le métabolisme de la plante n'est pas dévié vers la mise en place des réactions de défense à un moment où cette mise en place est inutile; ce métabolisme est mis en alerte et ce n'est que lorsque la plante est l'objet d'une attaque qu'elle mobilise ses défenses, et cela beaucoup plus intensément qu'en l'absence de traitement.

L'invention a donc pour objet l'utilisation pour la potentialisation et la stimulation des défenses naturelles des plantes, en particulier des céréales et notamment du blé ainsi que de la pomme de terre et de la vigne, d'une composition phytosanitaire contenant une ou plusieurs oligopectines composées de moins de 150, de préférence de 3 à 50 et plus préférentiellement de 3 à 20 unités saccharidiques, ces oligopectines étant présentes dans la composition à des concentrations qui n'induisent pas directement de réactions de défense, c'est-à-dire à des concentrations de l'ordre de 1 à 20 mg/l, de préférence de 2 à 10 mg/l et, plus préférentiellement encore, de 5 à 10 mg/l.

Dans un mode de réalisation avantageux, la susdite composition phytosanitaire comprend, en combinaison avec les oligopectines, au moins un autre produit phytosanitaire choisi dans le groupe des fongicides.

L'invention a également pour objet un procédé de traitement des plantes, en particulier des céréales, notamment du blé, de la pomme de terre et de la vigne, pour la potentialisation et la stimulation de leurs défenses naturelles, c'est-à-dire propre à assurer une protection préventive vis-à-vis des agents pathogènes, procédé qui est caractérisé par le fait qu'il comprend l'application, notamment sur les feuilles ou sur les semences, d'une composition contenant une ou plusieurs oligopectines composées de moins de 150, de préférence de 3 à 50 et plus préférentiellement de 3 à 20 unités saccharidiques, ces oligopectines étant présentes dans la composition à des concentrations qui n'induisent pas directement de réactions de défense, c'est-à-dire à des concentrations de l'ordre de 1 à 20 mg/l, de préférence de 2 à 10 mg/l et, plus préférentiellement encore, de 5 à 10 mg/l.

Suivant un mode de réalisation avantageux, le procédé conforme à l'invention est caractérisé par le fait que la susdite composition est appliquée à la plante traitée en des quantités à l'hectare qui n'induisent pas directement de réactions de défense, c'est-à-dire en des quantités de l'ordre de 10 à 1000 g, de préférence de 20 à 500 g et plus préférentiellement encore de 50 à 200 g.

Il est rappelé que, par le terme "oligopectines", on désigne les produits d'hydrolyse des pectines.

Les pectines sont les principaux constituants polysaccharidiques de la paroi primaire des végétaux terrestres; ce sont des polysaccharides d'un poids moléculaire de 100000 à 150000; elles consistent essentiellement en des unités d'acide galacturonique partiellement méthylés reliés par des liaisons glucosidiques; il s'agit de polysaccharides linéaires ayant jusqu'à environ deux mille unités saccharidiques par molécule.

Il existe trois types principaux de pectines, à savoir les homopolygalacturonanes, les rhamnogalacturonanes de type I et les rhamnogalacturonanes de type II.

Les homopolygalacturonanes, ou acide polygalacturonique fréquemment désigné par PGA, sont des polymères linéaires d'acide galacturonique dont le degré de polymérisation peut atteindre 2000 et dont les unités structurelles sont liées par des liaisons $\alpha$ 1->4.

Dans ces polysaccharides, le squelette d'acide $\alpha$ 1->4 galacturonique peut comporter des ramifications à base de xylose ou être entrecoupé par des résidus $\alpha$ 1->2 rhamnose, qui introduisent des "coudes" dans la structure tridimensionnelle de la molécule. Lorsque le rapport molaire du rhamnose à l'acide galacturonique est proche de 1:1, il s'agit de rhamnogalacturonanes de type I généralement désignés par RGI.

Il s'agit de rhamnogalacturonanes de type II généralement désignés par RGII lorsque les polysaccharides comportent en outre des chaînes latérales constituées d'arabinose et de galactose; dans ces rhamnogalacturonanes de type II, l'agencement des résidus acide galacturonique, rhamnose, arabinose et galactose est encore plus complexe que précédemment.

L'invention pourra être bien comprise à l'aide du complément de description qui suit et des exemples non limitatifs qui sont donnés en rapport notamment avec des modes de réalisation avantageux.

Se proposant de stimuler les défenses naturelles des susdites plantes, autrement dit de leur conférer préventivement une immunité contre les agents pathogènes, on s'y prend comme suit ou de façon équivalente.

On traite les plantes identifiées plus haut et dont il s'agit de stimuler les défenses naturelles lors d'une attaque par un agent pathogène, à l'aide d'une composition devant être appliquée sur les feuilles ou sur les semences et comprenant, outre les véhicules et constituants classiques de ce genre de composition, une ou plusieurs oligopectines ayant 150, de préférence de 3 à 50 et, plus préférentiellement encore, de 3 à 10 unités saccharidiques, présentes à des concentrations qui n'induisent pas directement de réactions de défense, c'est-à-dire à des concentrations de l'ordre de 1 à 20, de préférence de 2 à 10 et, plus préférentiellement, de 5 à 10 mg/l.

Ce traitement est généralement réalisé à partir des premiers stades végétatifs de la plante éventuellement en plusieurs applications successives avantageusement par pulvérisation.

Le moment précis de la ou des applications sera choisi notamment en fonction de la plante traitée.

Le véhicule ou vecteur est généralement l'eau.

Il est toutefois possible d'avoir recours, en lieu et place de l'eau, à un vecteur choisi dans le groupe comprenant les huiles minérales, les huiles végétales, tous corps gras liquides et les alcools dont notamment le propylèneglycol ou le glycérol.

Les constituants classiques essentiels des susdites compositions peuvent varier selon la nature de la plante traitée; ils sont généralement choisis dans le groupe comprenant des solvants, des agents tensio-actifs, des agents dispersants et/ou des charges solides.

Pour préparer les oligopectines constituant la substance active des susdites compositions, on peut effectuer une hydrolyse enzymatique ou acide de pectines généralement extraites de marc de pommes ou d'écorces d'agrume, notamment de citron.

A cet égard, il est rappelé que les teneurs en pectines de ces matières premières sont, exprimées en % en poids par rapport à la matière sèche, de:

- 15% dans le cas du marc de pomme,
- 25% dans le cas des écorces d'orange ou de pamplemousse,
- 35% dans le cas des écorces de citron et
- 50% dans le cas des écorces de citron vert.

Dans la pratique, on extrait les pectines des sous-produits de l'industrie des jus de fruit; on peut faire agir pendant 2 à 10 heures à une température de 60 à 80°C un acide minéral, par exemple l'acide chlorhydrique, à un pH de 1 à 2,5.

On purifie l'extrait par exemple par filtration et centrifugation; on neutralise et on concentre le milieu d'extraction, on précipite les pectines par un alcool, tel que l'éthanol ou l'isopropanol, on les sèche et on les obtient sous forme de poudre.

La dégradation enzymatique de ces pectines en oligopectines peut être réalisée à l'aide de pectines lyases (notamment EC 4.2.2.1.0) ou de pectinases, encore appelées polygalacturonases (notamment EC 3.2.1.15), toutes deux extraites *d'Aspergillus niger.*

Dans les exemples qui suivent, on décrit

- d'une part, la préparation par dégradation enzymatique d'une pectine constituant la matière première, de trois hydrolysats contenant chacun au moins une des oligopectines qui constituent la substance active des compositions conformes à l'invention, et désignés respectivement par H18, H19 et H21,
- d'autre part, deux compositions selon l'invention et
- d'autre part encore, des expériences illustrant l'invention.

## EXEMPLE 1

Préparation deux hydrolysats désignés respectivement par H18 et H19.

La matière première est constituée par une pectine de pomme; il s'agit d'un acide polygalacturonique partiellement méthoxylé commercialisé par la Société Sigma sous la référence P-2157.

On utilise comme enzyme la pectine lyase d'*Aspergillus niger* commercialisée par la Société Sigma sous la référence P-7052.

On prépare un tampon phosphate-citrate 20 mM à pH 5.

On dissout 25 g de la susdite pectine dans 5 litres du susdit tampon en ajoutant régulièrement du phosphate dibasique (0,2M) en quantité suffisante pour maintenir à 5 le pH qui tend à diminuer au fur et à mesure de la solubilisation de la pectine.

A 2 litres de cette solution, thermostatée à 40°C, on ajoute 20 unités de la susdite pectine lyase.

On maintient l'ensemble à 40°C pendant 30 minutes.

On ultrafiltre ensuite, en continu et avec un débit de 500 à 1000 ml/heure, la susdite solution dans un dispositif d'ultrafiltration tangentielle commercialisé par la Société Millipore sous la marque de fabrique PELLICON, équipé d'une cassette de porosité de 10000 Daltons, la pression étant de 1 bar en entrée.

Pendant cette ultrafiltration, le volume à ultrafiltrer est maintenu constant à 2 litres par addition automatique de 3 litres de solution de pectine.

L'ultrafiltrat de 4 litres obtenu à l'issue de cette première opération d'ultrafiltration contient les oligopectines de masse moléculaire inférieure à 10000 Daltons; sachant que la masse moléculaire de l'unité saccharidique est d'environ 200, les oligopectines contenues dans l'ultrafiltrat sont constituées d'au plus 50 unités saccharidiques.

L'ultrafiltrat est soumis à une autre ultrafiltration tangentielle à l'aide du même dispositif, cette fois équipé d'une cassette de porosité de 500 Daltons.

Par cette deuxième ultrafiltration, on obtient le dessalement de l'ultrafiltrat précédent et l'élimination des oligopectines de masse moléculaire inférieure à 500 Daltons, c'est-à-dire constituées d'au plus deux unités saccharidiques; cette deuxième ultrafiltration est effectuée sous une pression en entrée inférieure à deux bars et à un débit de 2 à 3 litres/heure.

L'ultrafiltrat de 4 litres ainsi obtenu est lavé deux fois avec 5 litres d'eau distillée, concentré à un volume de 50 ml par évaporation à 55°C à l'aide d'un dispositif de marque ROTOVAPOR, neutralisé à l'aide d'une solution de soude diluée puis lyophilisé.

Une analyse par chromatographie ionique couplée à l'ampérométrie et utilisant la résine échangeuse d'ions commercialisée par la Société Dionex Chemical Corp., filiale de Dow, sous la marque DIONEX, selon la technique décrite par Spino et al. dans "Carbohydrate Research", 247 (1993) 9-20, montre que les oligopectines constitutives de la susdite poudre ont en fait de 3 à 10 unités saccharidiques, le degré de polymérisation moyen étant de 4 à 6.

On obtient 15 g d'une poudre de couleur crème; cette poudre constitue l'hydrolysat H19.

Le rétentat de la susdite première opération d'ultrafiltration est lui-même soumis à une troisième opération d'ultrafiltration sur le même dispositif équipé cette fois d'une cassette de porosité de 30000 Daltons.

L'ultrafiltrat ainsi obtenu contient par conséquent les oligopectines, d'une part de masse moléculaire inférieure à 30000 Daltons --c'est-à-dire constituées d'au plus 150 unités saccharidiques-- et, d'autre part, en raison de la susdite première opération d'ultrafiltration, de masse moléculaire de plus de 10000 Daltons, c'est-à-dire de plus de 50 unités saccharidiques.

L'ultrafiltrat de 0,75 litre ainsi obtenu est lavé deux fois avec 5 litres d'eau distillée, concentré à un volume de 50 ml par évaporation à 55°C à l'aide du susdit ROTOVAPOR, neutralisé à l'aide d'une solution de soude diluée puis lyophilisé.

On obtient 5 g d'une poudre de couleur crème qui constitue l'hydrolysat H18.

Par la méthode de Blumenkrantz et Asboe-Hansen décrite dans "Analytical Biochemistry" 54, pages 484-489 (1973) et mettant en oeuvre le métahydroxyphényle, on a trouvé que la teneur en acides uroniques est de 100%.

Une analyse par chromatographie ionique couplée à l'ampérométrie et utilisant la résine échangeuse d'ions commercialisée par la Société Dionex Chemical Corp., filiale de Dow, sous la marque DIONEX, montre que les oligopectines constitutives de la susdite poudre ont en fait de 8 à 30 unités saccharidiques, le degré de polymérisation moyen étant environ de 10 à 20.

## EXEMPLE 2

Préparation d'un hydrolysat désigné par H21.

On dissout dans 5 litres d'eau une quantité de 25 g de la pectine utilisée à l'exemple 1.

On ajoute en continu de la soude (0,5 N) pour maintenir le pH à 10.

Après dissolution complète, on porte la température à 70°C et on la maintient à cette valeur pendant 30 minutes.

On déméthoxyle ainsi le polymère.

La solution de polymère déméthoxylé est neutralisée à l'aide de HCl 1N et dessalée par ultrafiltration tangentielle à l'aide du dispositif utilisé à l'exemple 1 et équipé d'une cassette de porosité de 10000 Daltons.

On obtient 4 litres de rétentat qui est complété à 5 litres avec de l'eau distillée et qui est amené à pH 4,5 à l'aide d'un tampon acétate de sodium 20 mM.

A la température ambiante, on ajoute 350 unités de la pectine hydrolase d'*Aspergillus niger* commercialisée par la Société Sigma sous la référence P-9179.

On laisse agir pendant 30 minutes.

L'hydrolysat ainsi obtenu est soumis à une ultrafiltration en continu sur le même dispositif équipé de la même cassette; pendant l'ultrafiltration, l'hydrolyse se poursuit et le volume de l'hydrolysat est maintenu à 5 litres à l'aide du susdit tampon; après deux heures d'hydrolyse, on ajoute de nouveau 350 unités de la susdite pectine hydrolase.

Après 5 heures d'hydrolyse et 4 heures et demie d'ultrafiltration concomitante, on obtient environ 12 litres d'ultrafiltrat.

Cet ultrafiltrat est traité (débit: 2 à 3 litres/heure, pression inférieure à 2 bars) à l'aide du susdit dispositif d'ultrafiltration équipé d'une cassette de porosité de 500 Daltons.

On le débarrasse ainsi des oligopectines comportant 2 unités saccharidiques et on le dessale.

Le rétentat est lavé deux fois avec 5 litres d'eau distillée, concentré par évaporation à 55°C à l'aide du ROTOVAPOR utilisé à l'exemple 1 jusqu'à un volume de 50 ml, neutralisé et lyophilisé.

On obtient ainsi 20 g d'une poudre blanche constituée d'oligopectines ayant une masse moléculaire de 500 à 10000 Daltons, c'est-à-dire comportant de 3 à 50 unités saccharidiques.

Le rendement est de 50 à 60% par rapport à la pectine constituant la matière première.

Par la méthode de Blumenkrantz et Asboe-Hansen décrite dans "Analytical Biochemistry" 54, pages 484-489 (1973) et mettant en oeuvre le métahydroxyphényle, on a trouvé que la teneur en acides uroniques est de 85%.

Une analyse par chromatographie ionique couplée à l'ampérométrie et utilisant la résine échangeuse d'ions commercialisée par la Société Dionex Chemical Corp., filiale de Dow, sous la marque DIONEX, montre que les oligopectines constitutives de la susdite poudre ont en fait de 3 à 9 unités saccharidiques, le degré de polymérisation moyen étant de 4 à 6.

La dégradation par voie chimique des pectines constituant la matière première peut être effectuée en ayant recours à un acide minéral, notamment l'acide chlorhydrique ou l'acide sulfurique.

Après désestérification par saponification, on met la matière première constituée par lesdites pectines en incubation à température élevée, notamment de 90 à 110°C, en présence d'une forte concentration en acide (0,5 M à 1 M) pendant 3 à 6 heures.

On neutralise ensuite le milieu réactionnel et on isole par ultrafiltration tangentielle en procédant comme décrit dans les exemples 1 et 2, les fractions correspondant, d'une part à des oligopectines de masse moléculaire de 500 à 10000 Daltons et, d'autre part à des oligopectines de masse moléculaire de 10000 à 30000 Daltons.

## EXEMPLE 3

Concentré liquide pour l'agriculture à base d'oligopectines:

| | |
|---|---|
| Oligopectine H 19 | 0,200 kg |
| Tween 80 | 0,005 kg |
| Méthylparaben sodé | 0,005 kg |
| Eau | 0,790 kg |
| Total | 1,000 kg |

Ce concentré liquide est utilisé après dilution d'une quantité comprise de préférence entre 10 et 50 g, de préférence entre 25 à 50 g, dans 1000 litres d'eau.

Cette dilution fournit une composition présentant une teneur en oligopectines H19 comprise entre 2 et 10 g, de préférence entre 5 et 10 g, pour 1000 litres d'eau.

## EXEMPLE 4

Poudre concentrée soluble contenant, en tant que matière active, l'hydrolysat H19 ainsi que des adjuvants.

Pour 1 kg en poids/poids, la constitution de cette poudre est comme suit:

| | |
|---|---|
| Oligopectine H 19 | 0,150 kg |
| Kaolin | 0,500 kg |
| Mannose | 0,050 kg |
| Méthylparaben sodé | 0,005 kg |
| Amidon purifié | 0,295 kg |
| Total | 1,000 kg |

Cette poudre concentrée est utilisée après dilution dans une quantité suffisante d'eau pour obtenir une composition dont la teneur en oligopectines H19 est comprise entre 2 et 10 g pour 1000 litres d'eau, de préférence entre 5 et 10 g.

L'efficacité des hydrolysats H18 et H19 a été mise en évidence sur des plants de blé infectés par la septoriose; l'agent pathogène responsable de la septoriose est connu sous le nom de *Septoria tritici.*

Les expériences correspondantes sont décrites à l'exemple 5.

## EXEMPLE 5

Etude de l'efficacité des hydrolysats H18 et H19 dans le cas du blé infecté par *Septoria tritici.*

Pour cette étude, on utilise 300 plantules de blé tendre d'hiver de type "Tendral" connu pour sa sensibilité à l'égard de *Septoria tritici.*

On cultive ces plantules dans 30 bacs contenant chacun un lot de 10 plantules.

On forme 5 ensembles, respectivement dénommés A, B, C, D et E et constitués chacun de 6 bacs, autrement dit de 6 lots de 10 plantules.

Dans chaque ensemble

- les premier et deuxième lots de plantules, qui sont des lots témoin, sont traités par pulvérisation foliaire au stade végétatif 2 feuilles (GS 12 selon l'échelle de Zadocks) par de l'eau distillée en présence de 0,1% de TWEEN 20,
- les troisième et cinquième lots sont traités par pulvérisation foliaire au stade végétatif 2 feuilles (GS 12 selon l'échelle de Zadocks) avec 5 ml d'une première composition comprenant, en tant que substance active, l'hydrolysat H18 et
- les quatrième et sixième lots sont traités par pulvérisation foliaire au stade végétatif 2 feuilles (GS 12 selon l'échelle de Zadocks) avec 5 ml d'une deuxième composition comprenant, en tant que substance active, l'hydrolysat H19.

Les susdites première et deuxième compositions contiennent dans l'eau distillée en présence de TWEEN 20:

- dans l'expérience sur l'ensemble A, 1 mg/l d'hydrolysat H18 ou H19,
- dans l'expérience sur l'ensemble B, 2 mg/l d'hydrolysat H18 ou H19,
- dans l'expérience sur l'ensemble C, 10 mg/l d'hydrolysat H18 ou H19,
- dans l'expérience sur l'ensemble D, 100 mg/l d'hydrolysat H18 ou H19,
- dans l'expérience sur l'ensemble E, 1000 mg/l d'hydrolysat H18 ou H19.

Après les susdits traitements par pulvérisation, les plantules des six lots de chaque ensemble sont maintenues à la température ambiante pendant 4 heures afin de laisser sécher les gouttelettes de produits à la surface des feuilles. Elles sont ensuite placées en chambre climatique à 19°C le jour et 17°C la nuit, avec une photopériode de 12 heures de lumière suivie de 12 heures d'obscurité et une humidité relative de 65%.

48 heures après ce traitement, on inocule par pulvérisation aux premier, troisième et cinquième lots de chaque ensemble une suspension dans l'eau en présence de 0,1% de TWEEN 20 contenant $10^5$ pycnospores d'une souche de *Septoria tritici* par ml.

Les deuxième, quatrième et sixième lots de chaque ensemble sont soumis à la même inoculation d'agent pathogène 72 heures après le traitement par les hydrolysats H18 et H19.

Les plantules des lots témoin et celles des lots ayant été inoculés avec *Septoria tritici* sont placées en enceinte climatisée à 19°C le jour et 17°C la nuit, avec une photopériode de 12 heures de lumière suivie de 12 heures d'obscurité et une humidité relative de 100% durant les 96 premières heures et de 85% ensuite.

21 jours après respectivement les premier et deuxième séries d'inoculation avec *Septoria tritici*, on inspecte les plantules de blé des quatre ensembles de six lots.

L'efficacité des produits est caractérisée, d'une part, par le pourcentage de protection PP et, d'autre part, par l'intensité d'infection II, tous deux exprimés en pourcent.

Les deux grandeurs sont définies par rapport aux lots témoin.

Le "pourcentage de protection" est calculé par la formule suivante:

$$\frac{\text{Nombre de plantes témoin présentant au moins une nécrose foliaire} - \text{Nombre de plantes traitées présentant au moins une nécrose foliaire}}{\text{Nombre de plantes témoin présentant au moins une nécrose foliaire}}$$

L' "intensité d'infection" est calculée par la formule suivante:

$$\frac{\text{Proportion de la surface foliaire nécrosée sur plantes témoin} - \text{Proportion de la surface foliaire nécrosée sur plantes traitées}}{\text{Proportion de la surface foliaire nécrosée sur plantes témoin}}$$

Les résultats de l'ensemble de ces déterminations sont réunis dans le tableau I.

TABLEAU I

| Hydrolysat mis en oeuvre | Ensemble (concentration en hydrolysat de la composition de traitement) | | Résultats enregistrés 21 jours après | | | |
|---|---|---|---|---|---|---|
| | | | Inoculation des spores 48 heures après traitement | | Inoculation des spores 72 heures après traitement | |
| | | | PP % | II % | PP % | II % |
| H 18 | A | 1 mg/l | 5,5 | 10,2 | 20,9 | 31,7 |
| | B | 2 mg/l | 18,9 | 41,7 | 33,3 | 64,7 |
| | C | 10 mg/l | 29,2 | 58,8 | 49,4 | 76,3 |
| | D | 100 mg/l | 7,5 | 11,5 | 19,4 | 27 |
| | E | 1000 mg/l | | | 5,2 | 0 |
| H 19 | A | 1 mg/l | 30 | 37,2 | 36,7 | 26,8 |
| | B | 2 mg/l | 49,5 | 53,7 | 69,6 | 79,5 |
| | C | 10 mg/l | 41,7 | 35,1 | 48,5 | 53,4 |
| | D | 100 mg/l | 2,8 | 3,5 | 11,9 | 17 |
| | E | 1000 mg/l | | | 0 | 0 |

De l'examen des résultats réunis dans le tableau I, il résulte

- que le degré moyen de polymérisation des oligopectines examinées dans l'expérience a peu d'influence sur les résultats,
- que le traitement doit être effectué le plus tôt possible avant une éventuelle infection par un agent pathogène, les résultats enregistrés pour une inoculation à 72 heures après le traitement étant meilleurs que ceux enregistrés pour une inoculation à 48 heures après le traitement,
- que les concentrations des compositions appliquées sont avantageusement d'environ 2 à environ 10 mg/l.

On notera en particulier que les protections obtenues pour une concentration en oligopectines de 100 mg/l sont significativement plus faibles que celles obtenues à 10 mg/l. De plus et surtout, pour une dose de 1000 mg/l, c'est-à-dire une dose pour laquelle, quel que soit le marqueur ou la plante étudié, les réactions de défense sont réputées maximales, le nombre de plantes infectées et la taille des lésions ne sont pas significativement inférieures à ce qui est observé dans le lot témoin, non traité.

## **EXEMPLE 6**

Expériences montrant la potentialisation des défenses naturelles des plantes par les hydrolysats H18 et H19.

On a procédé à trois expériences.
Dans une première expérience, en vue d'étudier l'effet éliciteur direct des hydrolysats H18 et H19, on a appliqué à des cultures de cellules de tabac BY des compositions à concentrations croissantes de H18 et de H19, à savoir:

- pour H18, des compositions à concentrations successivement égales à 2 mg/l, 10 mg/l, 20 mg/l, 40 mg/l et 200 mg/l,
- pour H19, des compositions à concentrations successivement égales à 10 mg/l et à 200 mg/l.

Pour chaque composition, on a testé quatre marqueurs des réactions de défenses, à savoir:

- l'activité phénylammonia lyase (PAL), qui est une enzyme clé pour la synthèse des phytoalexines chez les plantes,
- l'activité O-méthyl transférase (OMT), qui est une enzyme impliquée dans la synthèse de lignine,
- l'activité lipoxygénase (LOX), qui est une enzyme impliquée dans la génération de jasmonate de méthyle, c'est-à-dire d'un élément de la cascade de signalisation aboutissant à l'activité des gènes de défense et
- la teneur en acide salicylique (SA), qui est un autre messager secondaire impliqué dans les réactions de défense.

Les résultats sont exprimés sous forme d'un facteur d'induction des marqueurs étudiés représentant le rapport entre les valeurs mesurées dans les cellules élicitées et celles mesurées dans ds cellules témoin non élicitées.

Les résultats de ces mesures qui sont effectuées de 4 à 48 heures après le début de l'incubation, sont réunis dans le tableau II ci-après.

TABLEAU II

| Oligopectines mises en oeuvre | | Facteur d'induction du marqueur de défense | | | |
|---|---|---|---|---|---|
| | | PAL | OMT | LOX | SA |
| H18 | 2 mg/l | NS* | NS | NS | NS |
| | 10 mg/l | NS | NS | NS | NS |
| | 20 mg/l | 12 | | NS | 4,2 |
| | 40 mg/l | 60 | | 2,7 | 11,3 |
| | 200 mg/l | 90 | 2,0 | 12,7 | 17,2 |
| H19 | 10 mg/l | NS | NS | NS | NS |
| | 200 mg/l | 85 | 1,3 | | 15,2 |

* NS = non significatif

L'examen de ces résultats montre que les hydrolysats H18 et H19 élicitent des réactions de défense dans les cellules traitées, ces élicitations se traduisant par l'accumulation des marqueurs lorsque lesdits hydrolysats sont utilisés à des concentrations allant de 20 à 200 mg par litre; en revanche, les mêmes marqueurs ne sont pas induits de manière significative lorsque la concentration en éliciteur, c'est-à-dire en hydrolysat H18 ou H19, est de 2 ou de 10 mg par litre.

Dans une deuxième expérience, on prétraite des cultures des mêmes cellules de tabac BY au jour suivant le repiquage en utilisant des compositions présentant des concentrations en hydrolysat H18 égales à 2 et à 10 mg par litre.

Sept jours plus tard, ces cultures ainsi que des cultures témoin non prétraitées sont traitées par une composition contenant l'hydrolysat H18 à la concentration de 40 mg par litre.

Il s'agit là d'une situation qui imite l'attaque par un agent pathogène.

On suit la cinétique d'accumulation d'acide salicylique (SA) de 4 à 48 heures après le traitement.

Ces mesures montrent que les cellules des cultures témoin accumulent SA jusqu'à des teneurs qui ne dépassent pas 50 ng par gramme de masse fraîche (MF).

Elles montrent également que le prétraitement par H18 stimule très fortement, de façon totalement inattendue, l'accumulation d'acide salicylique lorsque la plante a été élicitée par cet hydrolysat sept jours plus tard; on note en effet, dans les cellules de tabac ainsi traitées, une accumulation de 700 ng par gramme de MF lorsque la concentration de H18 lors du prétraitement est de 2 mg par litre et de 1200 ng par gramme de MF lorsque la concentration, lors du prétraitement, est de 10 mg par litre.

L'effet potentialisateur obtenu grâce à l'utilisation conforme à l'invention est ainsi démontré.

Dans une troisième expérience, on utilise l'hydrolysat H19 et des fragments de feuilles de blé, la première feuille de plantules de blé âgées de 8 jours étant excisée, soumise à l'abrasion par du papier de ponçage fin et découpée en fragments de 1 cm qui sont mis en flottaison dans un tampon approprié pendant 1 heure.

On constitue 21 lots dont 7 servent de témoin.

Dans le tampon de 7 des 14 lots qui ne servent pas de témoin, on introduit l'hydrolysat H19 à la concentration de 10 mg par litre; dans le tampon des 7 autres lots qui ne servent pas de témoin, on introduit H19 à la concentration de 100 mg par litre.

On laisse incuber pendant 18 heures.

A la fin de cette incubation, les fragments de feuille des 21 lots sont élicités par un β-glucane de levure à une concentration de 200 mg par litre, ce produit étant connu pour stimuler fortement les réactions de défense chez les plantes.

Le marqueur étudié est cette fois l'accumulation, dans les minutes qui suivent l'apport de l'éliciteur, de peroxyde d'hydrogène, dont la concentration est suivie par luminométrie dans le milieu d'incubation des fragments de feuille.

On note que, par rapport aux fragments des lots non prétraités, le prétraitement par H19 à la concentration de 100 mg par litre n'induit pas une accumulation plus forte de peroxyde d'hydrogène.

Au contraire, le prétraitement par H19 à la concentration de 10 mg par litre augmente d'un facteur de 2 à 20 l'accumulation de peroxyde.

Il résulte de ces expériences que, lorsque les hydrolysats H18 (voir l'expérience 2) ou H19 (voir l'expérience 3) sont utilisés en prétraitement à des concentrations de 2 ou 10 mg par litre, c'est-à-dire dans une gamme où il n'y a pas d'élicitation directe des réactions de défense, ils sur-induisent très fortement et de façon totalement imprévisible et surprenante les réactions de défense déclenchées par une élicitation survenant respectivement 18 heures et 7 jours après le prétraitement.

On constate également que, lorsqu'il est utilisé en prétraitement à une concentration de 100 mg par litre, l'hydrolysat H19 n'a pas d'effet potentialisateur.

## Revendications

**1.** Utilisation pour la potentialisation et la stimulation des défenses naturelles des plantes, en particulier des céréales et notamment du blé ainsi que de la pomme de terre et de la vigne, d'une composition phytosanitaire contenant une ou plusieurs oligopectines composées de moins de 150, de préférence de 3 à 50 et plus préférentiellement de 3 à 20 unités saccharidiques, ces oligopectines étant présentes dans la composition à des concentrations qui n'induisent pas directement de réactions de défense, c'est-à-dire à des concentrations de l'ordre de 1 à 20 mg/l, de préférence de 2 à 10 mg/l et, plus préférentiellement encore, de 5 à 10 mg/l.

**2.** Procédé de traitement des plantes, en particulier des céréales, notamment du blé, de la pomme de terre et de la vigne, pour la potentialisation et la stimulation de leurs défenses naturelles, c'est-à-dire propre à assurer une protection préventive vis-à-vis des agents pathogènes, procédé **caractérisé par le fait qu'**il comprend l'application, notamment sur les feuilles ou sur les semences, d'une composition contenant une ou plusieurs oligopectines composées de moins de 150, de préférence de 3 à 50 et plus préférentiellement de 3 à 20 unités saccharidiques, ces oligopectines étant présentes dans la composition à des concentrations qui n'induisent pas directement de réactions de défense, c'est-à-dire à des concentrations de l'ordre de 1 à 20 mg/l, de préférence de 2 à 10 mg/l et, plus préférentiellement encore, de 5 à 10 mg/l.

**3.** Procédé selon la revendication 2, **caractérisé par le fait que** la composition contenant une ou plusieurs oligopectines est appliquée à la plante traitée en des quantités à l'hectare qui n'induisent pas directement de réactions de défense, c'est-à-dire en des quantités de l'ordre de 10 à 1000 g, de préférence de 20 à 500 g et plus préférentiellement encore de 50 à 200 g.

**4.** Composition mise en oeuvre conformément à l'utilisation selon la revendication 1, comprenant, outre les véhicules et constituants classiques, une ou plusieurs oligopectines ayant 150, de préférence de 3 à 50 et, plus préférentiellement encore, de 3 à 20 unités saccharidiques, présentes à des concentrations qui n'induisent pas directement de réactions de défense, c'est-à-dire à des concentrations de l'ordre de 1 à 20, de préférence de 2 à 10 et, plus préférentiellement, de 5 à 10 mg/l.

**5.** Composition selon la revendication 4, dans laquelle le vecteur est l'eau ou est choisi dans le groupe comprenant les huiles minérales, les huiles végétales, tous corps gras liquides et les alcools dont notamment le propylèneglycol ou le glycérol et dans laquelle les constituants classiques sont choisis dans le groupe comprenant des solvants, des agents tensio-actifs, des agents dispersants et/ou des charges solides.

## Patentansprüche

**1.** Verwendung zum Potenzieren und Stimulieren natürlicher Abwehrsysteme von Pflanzen, insbesondere von Getreidepflanzen und vor allem von Weizen sowie Kartoffel und Wein, von einer pflanzenschützenden Zusammensetzung, die ein oder mehrere Oligopektine enthält, die aus wenigstens 150, vorzugsweise aus 3 bis 50 und ganz bevorzugt aus 3 bis 20 Einheiten Sacchariden zusammengesetzt sind, wobei diese Oligopektine in der Zusammensetzung in Konzentrationen vorhanden sind, die keine direkten Abwehrreaktionen induzieren, das heißt, in Konzentrationen der Größenordnung von 1 bis 20 mg/l, vorzugsweise von 2 bis 10 mg/l und überdies ganz bevorzugt von 5 bis 10 mg/l.

**2.** Verfahren zur Behandlung von Pflanzen, insbesondere von Weizen, Kartoffel und Wein, zum Potenzieren und Stimulieren ihrer natürlichen Abwehrsysteme, das heißt, das geeignet ist, einen präventiven Schutz gegenüber pathogenen Stoffen sicher zu stellen, wobei das Verfahren **dadurch gekennzeichnet ist, daß** dieses das Aufbringen, insbesondere auf die Blätter oder auf die Samen, einer Zusammensetzung umfaßt, die ein oder mehrere Oligopektine enthält, die aus wenigstens 150, vorzugsweise aus 3 bis 50 und ganz bevorzugt aus 3 bis 20 Einheiten Sacchariden zusammengesetzt sind, wobei diese Oligopektine in der Zusammensetzung in Konzentrationen vorhanden sind, die keine direkten Abwehrreaktionen induzieren, das heißt, in Konzentrationen der Größenordnung von 1 bis 20 mg/l, vorzugsweise von 2 bis 10 mg/l und überdies ganz bevorzugt von 5 bis 10 mg/l.

3. Verfahren nach Anspruch 2, **dadurch gekennzeichnet, daß** die Zusammensetzung, die ein oder mehrere Oligopektine enthält, auf die behandelte Pflanze in Mengen pro Hektar aufgebracht wird, die keine direkten Abwehrreaktionen induzieren, das heißt, in Mengen der Größenordnung von 10 bis 1000 g, vorzugsweise von 20 bis 500 g und überdies ganz bevorzugt von 50 bis 200 g.

4. Zusammensetzung zur Verwertung in Übereinstimmung mit der Verwendung gemäß Anspruch 1, die außer den Trägerstoffen und herkömmlichen Bestandteilen, ein oder mehrere Oligopektine mit 150, vorzugsweise von 3 bis 50 und überdies ganz bevorzugt von 3 bis 20 Einheiten Sacchariden umfaßt, die in Konzentrationen vorliegen, welche keine direkten Abwehrreaktionen induzieren, das heißt, in Konzentrationen der Größenordnung von 1 bis 20, vorzugsweise von 2 bis 10 und ganz bevorzugt von 5 bis 10 mg/l.

5. Zusammensetzung nach Anspruch 4, in welcher der Träger Wasser ist oder ausgewählt ist aus der Gruppe bestehend aus Mineralölen, Pflanzenölen, allen flüssigen, fettigen Substanzen und Alkoholen, von denen insbesondere Propylenglycol oder Glycerol, und in welcher die herkömmlichen Bestandteile ausgewählt sind aus der Gruppe bestehend aus Lösungsmitteln, spannungsaktiven Stoffen, Dispergenzmitteln und oder festen Füllstoffen.

**Claims**

1. Use to potentiate and stimulate plant natural defence systems, particularly of cereals and notably of wheat as well as potato and vine, of a plant protection composition containing one or more oligopectins composed of less than 150, preferably 3 to 50 and more preferentially 3 to 20 saccharide units, these oligopectins being present in the composition at concentrations that do not directly induce defence reactions, i.e. at concentrations in the order of 1 to 20 mg/l, preferably 2 to 10 mg/ml and more preferentially 5 to 10 mg/l.

2. Process for the treatment of plants, particularly of cereals and notably of wheat as well as potato and vine, to potentiate end stimulate their natural defence systems, i.e. enough to ensure preventive protection against pathogenic agents, **characterised in that** it comprises the application, notably to the leaves or the seeds, of a composition containing or more oligopectins composed of less than 150, preferably 3 to 50 and more preferentially 3 to 20 saccharide units, these oligopectins being present in the composition at concentrations that do not directly induce defence reactions, i.e. at concentrations in the order of 1 to 20 mg/l, preferably 2 to 10 mg/ml and more preferentially 5 to 10 mg/l.

3. Process according to claim 2, **characterised in that** the composition containing one or more oligopectins is applied to the treated plant in quantities per hectare that do not directly induce defence reactions, i.e. in quantities in the order of 10 to 1000 g, preferably 20 to 500 g and more preferentially still from 50 to 200 g.

4. Composition applied in conformity with the use according to Claim 1, comprising not only the conventional vehicles and constituents but also one or more oligopectins composed of less than 150, preferably 3 to 50 and more preferentially 3 to 20 saccharide units, present at concentrations that do not directly induce defence reactions, i.e. at concentrations in the order of 1 to 20 mg/l, preferably 2 to 10 mg/ml and more preferentially 5 to 10 mg/l.

5. Composition according to Claim 4, in which the vector is water or is chosen from among the group comprising mineral oils, vegetable oils, all liquid fats and alcohols, notably propylene glycol or glycerol, and in which the conventional constituents are chosen from the group comprising solvents, surfactants, dispersants and/or solid bulking agents.